# EUROPEAN PATENT APPLICATION

(11) **EP 2 518 805 A2**
(43) Date of publication of application: **31.10.2012**
(21) Application number: 10839782.9
(22) Date of filing: 22.12.2010
(51) Int. Cl.: H01M 4/583, H01M 4/60, C01B 31/02, C08K 3/04, H01G 9/042, H01M 8/02

(54) **ELECTROCHEMICAL DEVICE**

(30) Priority: 22.12.2009 KR 20090129361; 18.02.2010 KR 20100014723; 29.06.2010 KR 20100061995
(71) Applicant: Suh, Kwang Suck, Seongnam-si, Gyeonggi-do 463-810 (KR)
(72) Inventor: KIM, Jong Eun, Seoul 158-758 (KR); KIM, Tae Young, Seoul 138-905 (KR)
(74) Representative: Beck & Rössig European Patent Attorneys
(86) International application number: PCT/KR2010/009235
(87) International publication number: WO 2011/078585

(57) **Abstract**

Disclosed is an electrochemical device, using, as an electrode material, a poly(ionic liquid)-modified graphene manufactured by binding an ionic liquid polymer to the surface of graphene.

## Description

### Technical Field

The present invention relates to an electrochemical device, and more particularly to a poly(ionic liquid)-modified graphene comprising graphene and an ionic liquid polymer, suitable for use in electrochemical devices such as supercapacitors, secondary batteries, etc., and to an electrochemical device manufactured using the same.

### Background Art

Graphene is a two-dimensional planar allotrope of carbon in which carbon atoms are formed in a honeycomb lattice structure, and has a high charge mobility of about 20,000 - 50,000 cm/Vs and a very high theoretical specific surface area of 2,630 m²/g. Recently, research into the application of graphene to electrochemical devices such as supercapacitors having very high capacitance or electric double-layer capacitors is ongoing.

Graphene is manufactured using a micromechanical process, chemical vapor deposition (CVD), oxidation-reduction, etc.

Among these, the method comprising oxidizing graphite so that layers of graphite oxide (GO) separate in solution to yield graphene oxide (G-O) which is then reduced, thereby preparing reduced graphene oxide (RG-O), is advantageous because graphene-based materials can be mass produced (although graphene and reduced graphene oxide are known to have different properties, for the sake of description in the present invention, the term 'graphene', is regarded as including both graphene and reduced graphene oxide). Recently, methods of utilizing graphene resulting from such oxidation-reduction as the electrodes of supercapacitors (or ultracapacitors) have been devised, by which the fabrication of supercapacitors having a specific capacitance of about 80 F/g or more has been reported. (R. S. Ruoff, Nano Lett., 2008, 8 (10), pp 3498-3502)

However, the above method is problematic because RG-O platelets may agglomerate again in the dispersion in the course of reducing graphene oxide, undesirably decreasing the specific surface area of graphene, and also because the binder material should be further added to the graphene dispersion, and thus the process may become complicated. The electrolyte used for supercapacitors is largely classified into an aqueous electrolyte and an organic solvent electrolyte. In the case of using electrode materials having high compatibility with such an electrolyte, electrochemical devices having higher specific capacitance may be manufactured. Hence, the demand of electrode materials having high compatibility with these electrolytes is increasing. Furthermore, the aqueous electrolyte or the organic solvent electrolyte has high ionic conductivity but has a narrow potential range in which oxidation-reduction does not occur electrochemically, undesirably resulting in supercapacitors with a low energy density. For this reason, attempts to increase the energy density of supercapacitors using an ionic liquid having a high potential range as the electrolyte are being made these days.

With the goal of solving the aforementioned problems, there are required a novel graphene composite having high compatibility with a variety of electrolytes including an ionic liquid, and an electrochemical device using the same.

### Disclosure

### Technical Problem

Accordingly, the present invention has been made keeping in mind the above problems encountered in the prior art, and an object of the present invention is to provide a poly(ionic liquid)-modified graphene which is manufactured by reacting graphene with an ionic liquid polymer, and an electrochemical device using the poly(ionic liquid)-modified graphene as an electrode material.

### Technical Solution

In order to accomplish the above objects, the present invention provides an electrochemical device, manufactured using a poly(ionic liquid)-modified graphene comprising graphene and an ionic liquid polymer.

The ionic liquid polymer may be a compound comprising a combination of a cation and an anion.

In the ionic liquid polymer, the cation as represented by Formula 1 below may be used, 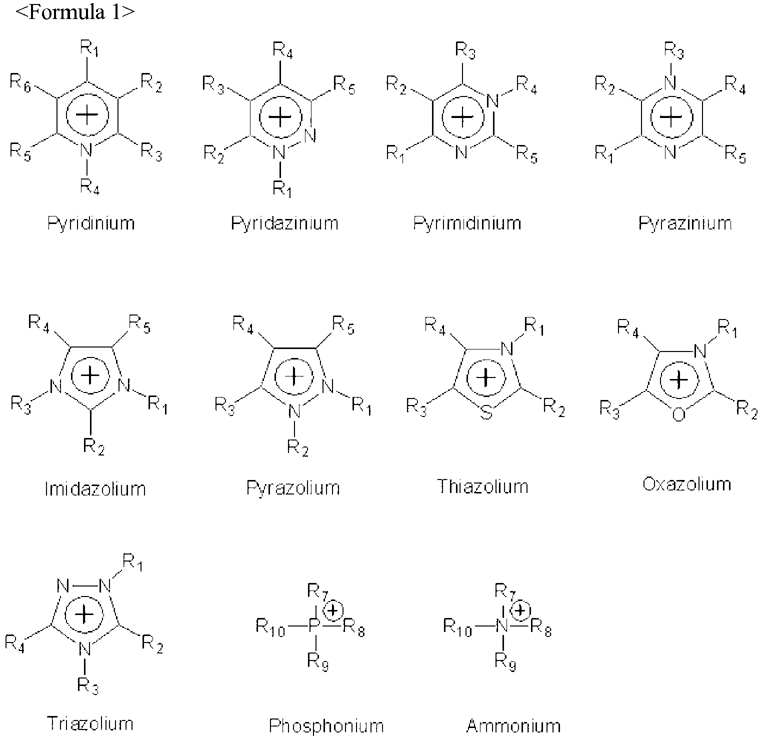 (wherein R₁ to R₁₀ are each independently any one selected from among i) hydrogen, ii) halogen, and iii) C₁-C₂₅ alkyl, alkenyl, alkynyl, benzyl, and phenyl, which may contain a heterogeneous element including O, N, Si and/or S, and may optionally contain Cl, Br, F, I, OH, NH₂ and/or SH), and the anion including [CH₃CO₂]⁻, [HSO₄]⁻, [CH₃OSO₃]⁻, [C₂H₅OSO₃]⁻, [AlCl₄]⁻ ,[CO₃]²⁻, [HCO₃]⁻,[NO₂]⁻, [NO₃]⁻[SO₄]²⁻ [PO₄]³⁻, [HPO₄]²⁻, [H₂PO₄]⁻, [HSO₃]⁻,[CuCl₂]⁻, Cl⁻, Br⁻, I⁻, [BF₄]⁻, [PF₆]⁻, [SbF₆]⁻, [CF₃SO₃]⁻, [HCF₂CF₂SO₃]⁻, [CF₃HFCCF₂SO₃]⁻, [HCClFCF₂SO₃]⁻, [(CF₃SO₂)₂N]⁻, [(CF₃CF₂SO₂)₂N]⁻, [(CF₃SO₂)₃C]⁻, [CF₃CO₂]⁻, [CF₃OCFHCF₂SO₃]⁻, [CF₃CF₂OCFHCF₂SO₃]⁻, or [CF₃CFHOCF₂CF₂SO₃]⁻, may be used, or both the cation and the anion may be used.

The graphene may be obtained by oxidizing/reducing graphite, by high-temperature heat treating expandable graphite comprising an acid intercalated in each layer of graphite, by microwave-treating intercalated graphite comprising an alkali metal intercalated in each layer of graphite, or by electrochemically treating graphite.

The poly(ionic liquid)-modified graphene may comprise 5∼95 wt% of the graphene and 5∼95 wt% of the ionic liquid polymer.

The electrochemical device may be a battery, a fuel cell, a capacitor or a device formed of a combination thereof, a supercapacitor, an ultracapacitor, or an electric double-layer capacitor.

The electrochemical device may comprise the poly(ionic liquid)-modified graphene serving as an electrode material.

The poly(ionic liquid)-modified graphene may further comprise one or more selected from among a binder, a carbon material, metal particles, and an electrical conductive polymer.

The binder may be any one selected from among polyperfluorosulfonic acid, polytetrafluoroethylene and a polyvinylidene fluoride copolymer, the carbon material may be one or more selected from among activated carbon, graphite, carbon black, carbon nanotubes and fullerene, and the electrical conductive polymer may be one or more selected from among polyaniline, polypyrrole, polythiophene, and derivatives thereof.

The electrochemical device according to the present invention may be a device in the same category as the electrochemical device of US Patent Application No. 2010/0035093 which is incorporated herein by reference.

### Advantageous Effects

According to the present invention, an ionic liquid polymer is bound to the surface of graphene, thus increasing dispersibility of graphene, thereby increasing the specific surface area of graphene and enhancing the compatibility with an electrolyte including an ionic liquid. Thus, when the graphene having the ionic liquid polymer bound thereto is used as an electrode material, electrochemical devices having superior specific capacitance and energy density can be manufactured.

### Description of Drawings

FIGS. 1 and 2 show transmission electron microscope (TEM) images of the poly(ionic liquid)-modified graphene manufactured using the ionic liquid polymer of Example 1;
FIG 3 shows an atomic force microscope (AFM) image and a graph of the poly(ionic liquid)-modified graphene manufactured using the ionic liquid polymer of Example 1;
FIG 4 shows a scanning electron microscope (SEM) image of the poly(ionic liquid)-modified graphene of Example 5;
FIG 5 schematically shows the supercapacitor of Example 6;
FIG 6 shows cyclic potential curves at voltage rates and Galvanostatic charge/discharge curves at different constant currents in the supercapacitor of Example 6 using the poly(ionic liquid)-modified graphene as an electrode material; and
FIG 7 shows cyclic potential curves at maximum voltage and Galvanostatic charge/discharge curves at 3.5 V (current density: 8 A/g) in the supercapacitor of Example 6 using the poly(ionic liquid)-modified graphene as an electrode material.

### Mode for Invention

Hereinafter, embodiments of the present invention are described in detail with reference to the appended drawings.

According to the present invention, a graphene-ionic liquid polymer is a poly(ionic liquid)-modified graphene in the form of the ionic liquid polymer being physically or chemically bound to the surface of graphene, and the manufacturing method thereof is described below.

Usable in the present invention, graphene is obtained by separating graphite layers. As such, graphite may include either graphite itself or graphite pretreated to facilitate layer separation. Typical pretreatment methods that facilitate the layer separation may include oxidizing graphite to manufacture graphene oxide, intercalating an acid to graphite layers and then thermally treating the graphite to thus expand it, intercalating an alkali metal to graphite layers and then treating the graphite with microwaves, electrochemically separating graphite, or combinations thereof.

The ionic liquid polymer usable in the present invention is a polymeric compound comprising a combination of cation and anion, and these components may be used alone or in mixtures of one or more thereof. Typical examples of the cation of the ionic liquid according to the present invention include those represented by Formula 1 below.

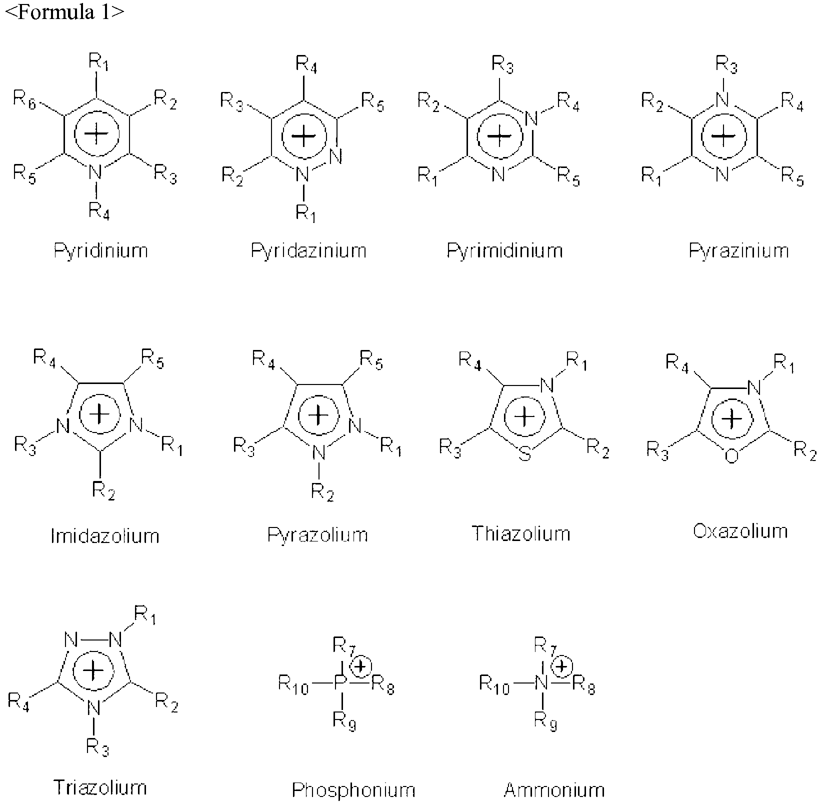

In the above formula, R₁ to R₁₀ are each independently any one selected from among i) hydrogen, ii) halogen, and iii) C₁-C₂₅ alkyl, alkenyl, alkynyl, benzyl, and phenyl, which may contain a heterogeneous element including O, N, Si and/or S, and may optionally contain Cl, Br, F, I, OH, NH₂ and/or SH.

The anion of the ionic liquid polymer is not particularly limited as long as it is an inorganic compound or a compound having inorganic elements, and specific examples thereof may include [CH₃CO₂]⁻, [HSO₄]⁻, [CH₃OSO₃]⁻, [C₂H₅OSO₃]⁻, [AlCl₄]⁻, [CO₃]²⁻, [HCO₃]⁻, [NO₂]⁻, [NO₃]⁻, [SO₄]²⁻, [PO₄]³⁻, [HPO₄]²⁻, [H₂PO₄]⁻, [HSO₃]⁻, [CᵤCl₂]⁻, Cl⁻, Br⁻, I⁻, [BF₄]⁻, [PF₆]⁻, [SbF₆]⁻, [CF₃SO₃]⁻, [HCF₂CF₂SO₃]⁻, [CF₃HFCCF₂SO₃]⁻, [HCClFCF₂SO₃]⁻, [(CF₃SO₂)₂N]⁻, [(CF₃CF₂SO₂)₂N]⁻, [(CF₃SO₂)₃C]⁻, [CF₃CO₂]⁻, [CF₃OCFHCF₂SO₃]⁻, [CF₃CF₂OCFHCF₂SO₃]⁻, and [CF₃CFHOCF₂CF₂SO₃]⁻.

The ionic liquid polymer is bound to the surface of graphene so that graphene is easily dispersed in a solution. In the case of graphene oxide, it functions to promote the reduction.

The method of manufacturing the poly(ionic liquid)-modified graphene according to the present invention is specified as below.
(i) The poly(ionic liquid)-modified graphene is manufactured by oxidizing pristine graphite thus obtaining graphene oxide the layers of which are separated, mixing the graphene oxide with an ionic liquid polymer, thus forming a graphene oxide-ionic liquid polymer, and reducing the graphene oxide using a reducing agent or heat.
(ii) The poly(ionic liquid)-modified graphene is manufactured by high-temperature heat treating expandable graphite in which an acid is intercalated in graphite layers, microwave-treating intercalated graphite in which an alkali metal is intercalated in graphite layers, or electrochemically treating graphite, followed by dispersing the graphite thus treated in an ionic liquid monomer thus forming a graphene-ionic liquid monomer, and then polymerizing the ionic liquid monomer.

Specifically, the method of manufacturing the poly(ionic liquid)-modified graphene using (i) as above is described below. According to the Hummer method, pristine graphite is oxidized using a mixture solution of KMnO₄, H₂SO₄, HNO₃ or the like, and is then dispersed in water or an organic solvent, thereby obtaining a graphene oxide dispersion. Subsequently, this solution is mixed with the ionic liquid polymer, resulting in the graphene oxide-ionic liquid polymer.

As such, in the case where graphene oxide is dispersed in water, preferably useful is a hydrophilic ionic liquid polymer, for example, an ionic liquid polymer having an anion, such as [NO₃]⁻, Cl⁻, Br⁻, I⁻, or [CH₃SO₄]⁻ bound thereto. Also, in the case where graphene oxide is dispersed in an organic solvent such as propylene carbonate, a hydrophobic ionic liquid polymer, for example an ionic liquid polymer having an anion such as [(CF₃SO₂)₂N]⁻, [(CF₃CF₂SO₂)₂N]⁻, [(CF₃SO₂)₃C]⁻, [CF₃CO₂]⁻, [CF₃OCFHCF₂SO₃]⁻, [CF₃CF₂OCFHCF₂SO₃]⁻, or [CF₃CFHOCF₂CF₂SO₃]⁻ bound thereto is preferably used.

Thereafter, the graphene oxide-ionic liquid polymer dispersion is reduced using a reducing agent such as hydrazine, hydroquinone, sodium borohydride or the like, or the dispersion is reduced using heat at 100∼300°C, thus manufacturing the poly(ionic liquid)-modified graphene.

In the course of manufacturing the poly(ionic liquid)-modified graphene by reducing graphene oxide in the present invention, the ionic liquid polymer is bound with graphene so that graphene is made stable, thereby preventing graphene from re-agglomerating during the reduction. Therefore, graphene in the poly(ionic liquid)-modified graphene may have a high specific surface area.

In addition, another method of manufacturing the poly(ionic liquid)-modified graphene according to the present invention, namely (ii) is described below. Specifically, expandable graphite having an acid intercalated in graphite layers is thermally treated at high temperature, intercalated graphite having an alkali metal intercalated in graphite layers is treated with microwaves, or graphite is electrochemically treated, thereby decreasing the interlayer attraction of graphite.

Then, the graphite thus treated is added to the ionic liquid monomer solution and dispersed, thus forming the graphene-ionic liquid monomer dispersion. As such, the ionic liquid monomer preferably comprises a cation having a functional group able to induce the polymerization, and an anion including [BF₄]⁻, [PF₆]⁻, [CF₃SO₂)₂N]⁻, or [(CF₃CF₂SO₂)₂N]⁻ in order to effectively separate the poly(ionic liquid)-modified graphene.

Then, a polymerization initiator is added to the graphene-ionic liquid monomer solution in order to polymerize the ionic liquid, thus manufacturing the poly(ionic liquid)-modified graphene. The initiator for polymerizing the ionic liquid monomer may include 2,2-azobisisobutyronitrile (AIBN), 1,1'-azobiscyclohexanecarbonitrile (ABCN), and benzoyl peroxide (BP), which may be used alone or in mixtures thereof.

The polymerization initiator may be used in an amount of 0.1 ∼ 3 parts by weight based on the amount of ionic liquid, and the polymerization may be carried out at 50∼80°C for 5∼72 hours. If the amount of initiator, the reaction temperature and the reaction time are less than the above lower limits, the reaction rate becomes too low or the reaction does not occur well, making it difficult to obtain a polymer having high molecular weight. In contrast, if they exceed the above upper limits, the ionic liquid polymer may deteriorate or the solvent may excessively evaporate because of there being an unnecessarily high initiator amount, long reaction time, or high reaction temperature.

When the poly(ionic liquid)-modified graphene is manufactured by means of (i) or (ii), the ionic liquid polymer of the poly(ionic liquid)-modified graphene preferably has a weight average molecular weight controlled in the range of 1,000∼2,000,000 g/mol. If the molecular weight thereof is less than 1,000 g/mol, long-term stability of the graphene dispersion becomes poor. In contrast, if the molecular weight thereof exceeds 2,000,000 g/mol, the solubility is decreased because of the molecular weight being too high.

The poly(ionic liquid)-modified graphene comprising the graphene-ionic liquid polymer includes 5∼95 wt% of graphene and 5∼95 wt% of the ionic liquid polymer. If the amount of graphene is less than 5 wt%, electrical conductivity of the poly(ionic liquid)-modified graphene is very low, and the amount of graphene able to form an electric double layer with the electrolyte is too low, making it difficult to ensure sufficient specific capacitance. In contrast, if the amount of graphene exceeds 95 wt%, processibility of the poly(ionic liquid)-modified graphene may undesirably decrease.

Also in the poly(ionic liquid)-modified graphene according to the present invention, the anion bound to the ionic liquid polymer may be exchanged by a typical anion exchange reaction, thus easily changing compatibility with an aqueous electrolyte, an organic solvent electrolyte or an ionic liquid electrolyte. For example, in the case where Cl⁻, Br⁻, [NO₃]⁻, or [CH₃SO₄]⁻ is bound as the anion of the ionic liquid polymer of the poly(ionic liquid)-modified graphene, compatibility with an aqueous electrolyte is high. When this anion is exchanged so that [BF₄]⁻, [PF₆]⁻, [CF₃SO₂)₂N]-, or [(CF₃CF₂SO₂)₂N]⁻ is bound, compatibility with an organic solvent electrolyte or an ionic liquid electrolyte may become superior.

The poly(ionic liquid)-modified graphene according to the present invention is obtained in the form of a slurry via a procedure such as filtering or the like, and thus may be utilized for a variety of electrochemical devices.

As such, in order to compensate for mechanical or electrical properties of the poly(ionic liquid)-modified graphene, an additional organic/inorganic material, for example, a binder, a carbon material, metal particles, and an electrical conductive polymer may be selectively used.

Examples of the binder may include polyperfluorosulfonic acid (Nafion), polytetrafluoroethylene and polyvinylidene fluoride copolymer, and examples of the carbon material may include activated carbon, graphite, carbon black, carbon nanotubes and fullerene, and examples of the electrical conductive polymer may include polyaniline, polypyrrole, polythiophene, and derivatives thereof.

The binder is typically used in an amount of 1∼20 wt% based on the amount of graphene. If the amount of binder is less than 1 wt%, complementation effects for mechanical properties become insignificant. In contrast, if the amount thereof exceeds 20 wt%, the binder which is an electrical insulator has been excessively added, undesirably deteriorating performance of the electrochemical device. As such, the electrochemical device includes a variety of devices, such as a battery, a fuel cell, a capacitor or a device formed of a combination thereof, a supercapacitor, an ultracapacitor, or an electric double-layer capacitor. Specifically, it may be employed in various electrochemical devices so as to further increase specific capacitance compared to conventional cases.

A better understanding of the present invention may be obtained by the following examples which are set forth to illustrate, but are not to be construed as limiting the present invention.

### <Example 1>

Example 1 pertains to a graphene dispersion stabilized with an ionic liquid polymer using the oxidation-reduction, and is specified as follows.

5 g of graphite was reacted in a solution comprising 25 g of KMnO₄, 3.75 g of NaNO₃, and 170 mL of H₂SO₄ with stirring, thus preparing graphite oxide, after which the graphite oxide was stirred in water for 30 min and centrifuged, thus obtaining a yellow-colored graphene oxide aqueous dispersion. 19 ml of the graphene oxide aqueous dispersion was mixed with 400 mg of an ionic liquid polymer of poly(1-vinyl-3-ethylimidazolium)bromide and stirred, thus obtaining an ionic liquid polymer-stabilized graphene oxide aqueous dispersion.

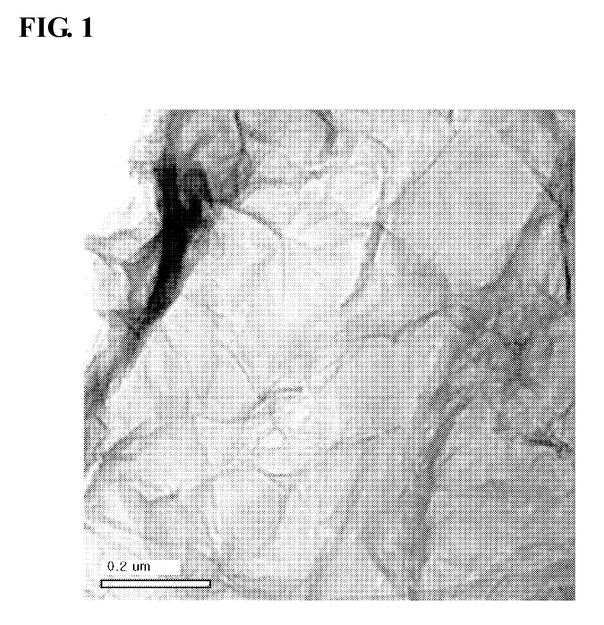

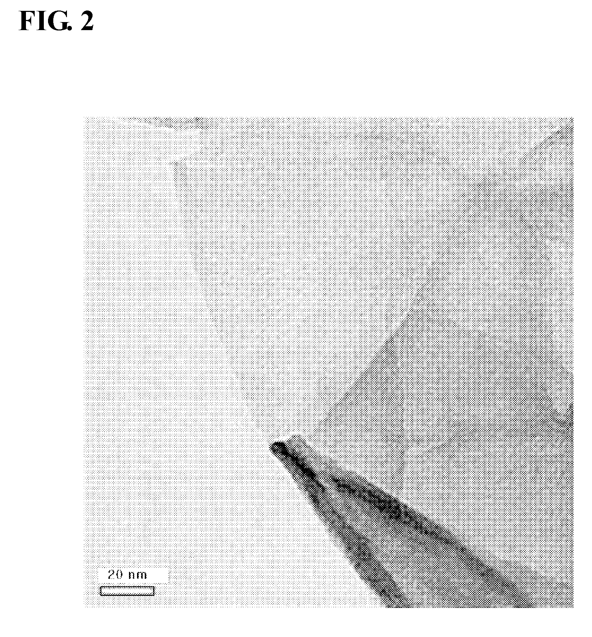

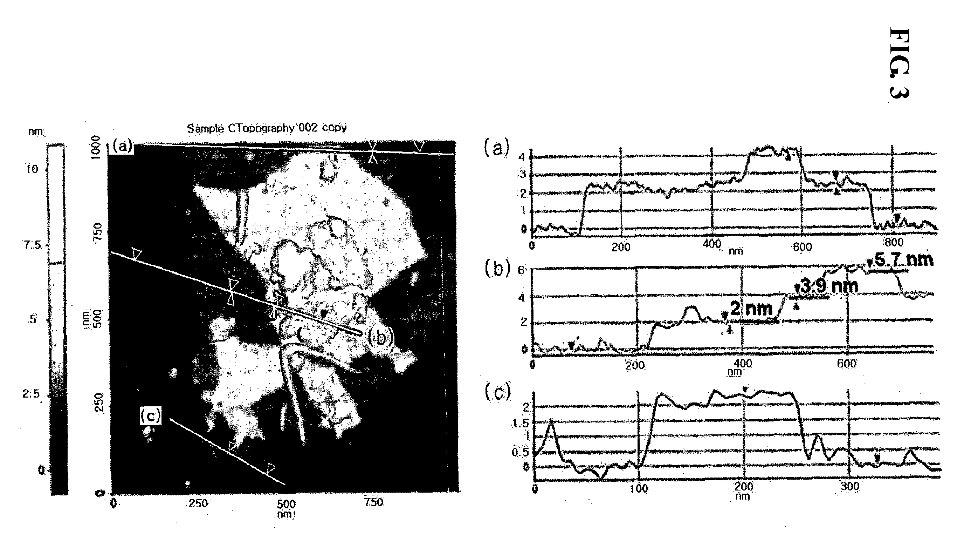

Subsequently, 3.2 mmol hydrazine was added thereto so that the aqueous dispersion was reduced at about 90°C for 1 hour, and thus the yellow-colored solution turned to a black color, yielding an ionic liquid polymer-stabilized graphene aqueous dispersion. This graphene aqueous dispersion was a stable dispersion because it did not precipitate even when allowed to stand for 5 months or longer. Part of this sample was observed with TEM. The results showed that agglomerating did not occur and the poly(ionic liquid)-modified graphene was present in the form of being separated in a single layer, as seen in FIGS. 1 and 2. FIGS. 1 and 2 represent the images of the same sample at different magnifications. Furthermore, part of this solution which is the graphene aqueous dispersion was observed with AFM. The results are shown in FIG 3. As seen in the image and the thickness profile of FIG 3, the sample was confirmed to be the poly(ionic liquid)-modified graphene having a height of about 1∼2 nm.

### <Example 2>

Using the Hummer method (Hummers W, Offeman R., "Preparation of graphite oxide", Jounal of the American Chemical Society, 80, 1958, 1339), graphite (SP-1, available from Bay Carbon) was acid treated thus preparing graphite oxide. Then, the graphite oxide thus prepared was stirred for about 1 hour using propylene carbonate as a solvent, thus obtaining an organic solvent dispersion in which 1.0 mg/ml graphene oxide was dispersed.

20 ml of the graphene oxide dispersion was mixed with 70 mg of an ionic liquid polymer of poly(1-vinyl-3-ethylimidazolium)bis(trifluoromethylsulfonylamide) and then stirred at about 150°C. In this case, while the color of the reaction solution was changed to black starting from about 0.5 hours after initiation of the reduction, the progress of reduction could be observed. Also after the reduction, the graphene dispersion in which graphene did not precipitate and was stably dispersed could be prepared. After reduction for about 1 hour, the solution was filtered using filter paper, and the electrical resistance of the poly(ionic liquid)-modified graphene remaining on the filter paper was measured to be 10³ Ohm/sq, from which the graphene oxide was evaluated to be rapidly reduced within a short period of time.

### <Example 3>

1 mg of expandable graphite thermally treated at 1,000°C for 1 min was added to 3 g of an ionic liquid of 1-vinyl-3-ethylimidazolium bis(trifluoromethylsulfonylamide) and stirred at 700 rpm. The graphene dispersion was added with 0.03 g of a polymerization initiator of 2,2-azobisisobutyronitrile (AIBN) and allowed to react at 65°C for 6 hours thus polymerizing the ionic liquid. The resulting graphene dispersion was in a gel state, and then further added with 20 g of propylene carbonate and stirred, thus obtaining a dark gray-colored graphene dispersion. This solution was a graphene dispersion in which graphene was uniformly dispersed in the organic solvent.

### <Example 4>

Example 4 pertains to conversion of the graphene dispersion of Example 2 into an aqueous dispersion using ion exchange.

20 g of the graphene dispersion of Example 2 was mixed with 3.6 g of tetrabutylammonium bromide and stirred for 10 min, and thus a dark gray-colored precipitate was formed. This precipitate was dried, and then dispersed again in water, thus obtaining a graphene aqueous dispersion.

### <Example 5>

Using the Hummer method (Hummers W, Offeman R., "Preparation of graphite oxide", Jounal of the American Chemical Society, 80, 1958, 1339), graphite (SP-1, available from Bay Carbon) was acid treated, thus obtaining graphite oxide which was then added to water and stirred for 30 min, thus obtaining an aqueous dispersion comprising 1.0 mg/ml graphene oxide dispersed therein.

20 ml of the graphene oxide aqueous dispersion was mixed with 100 mg of an ionic liquid polymer of poly(1-vinyl-3-ethylimidazolium)bromide and stirred, thus obtaining a graphene oxide-ionic liquid polymer. Thereafter, the graphene oxide-ionic liquid polymer was reduced at about 90°C for 1 hour using 6.4 mmol hydrazine hydrate as a reducing agent, thus manufacturing a poly(ionic liquid)-modified graphene.

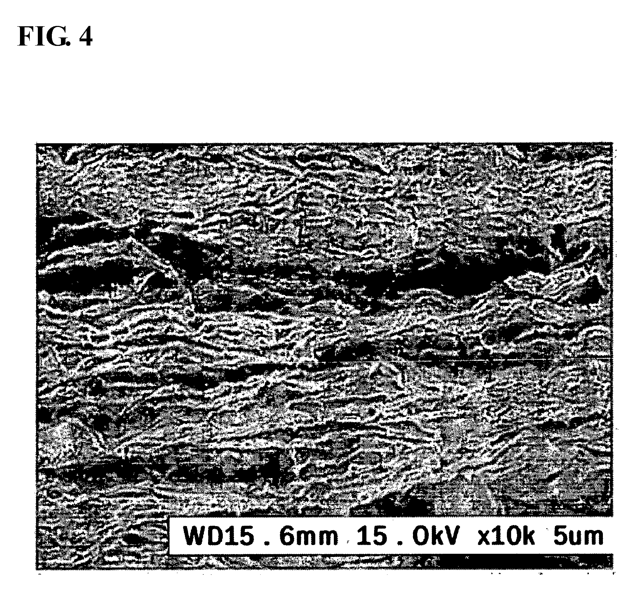

The poly(ionic liquid)-modified graphene was filtered with an alumina membrane filter (ANODISC), after which 2 ml of a solution of 1 M tetraethylammonium tetrafluoroborate (TEABF₄) electrolyte in propylene carbonate was then added dropwise thereto, thus obtaining a slurry type poly(ionic liquid)-modified graphene as an electrode material. This was observed using SEM. The results are shown in FIG 4. 7 mg of the electrode material was placed on an aluminum foil coated with carbon black, and then rolled together with a separator such as a porous polypropylene film (Celgard 3501) thus manufacturing a supercapacitor cell. The potential-current curve thereof was obtained in the range of 0∼2.5 V using a cyclic potentiostat (WPG100, WonA tech), from which specific capacitance (Csp=2I/(dt/dv)*1/m) was determined to be about 188 F/g.

### <Comparative Example 1>

Comparative Example 1 was made in the same manner as was Example 5, with the exception that graphene obtained by the reduction without the use of an ionic liquid polymer was mixed with 3 wt% of a binder such as polytetrafluoroethylene. The specific capacitance of the resulting supercapacitor cell was measured to be about 144 F/g, which was lower than when using the ionic liquid polymer in Example 5.

### <Example 6>

Using the Hummer method, graphite (SP-1, available from Bay Carbon) was acid treated, thus obtaining graphite oxide. Separately, 75 mg of an ionic liquid polymer such as poly(1-vinyl-3-ethylimidazolium) bis(trifluoromethyl)sulfonylamide was completely dissolved in 20 ml of propylene carbonate with stirring at room temperature for 30 min.

Then, 20 mg of graphite oxide powder was dispersed in the ionic liquid polymer-containing propylene carbonate solution using ultrasonic waves. According to typical procedures, a brown-colored graphene oxide-ionic liquid polymer dispersion at a constant concentration of 1.0 mg/ml in the propylene carbonate solvent was obtained using ultrasonic treatment for 1 hour.

The graphene oxide-ionic liquid polymer dispersion was heated in an oil bath at 150°C for 1 hour to thus perform thermal reduction, thereby obtaining a black-colored reduced poly(ionic liquid)-modified graphene (PIL:RG-O) dispersion.

A supercapacitor was manufactured using the poly(ionic liquid)-modified graphene as follows. The poly(ionic liquid)-modified graphene was collected on a Teflon membrane (0.2 µm pore size) by vacuum filtration. Then, the poly(ionic liquid)-modified graphene was impregnated with an ionic liquid electrolyte such as 1-ethyl-3-methylimidazolium bis(trifluoromethyl)sulfonylamide (EMIM-NTf₂) (Basionics HP01, BASF) under filtration, and used as the electrode without any additional binder or additives.

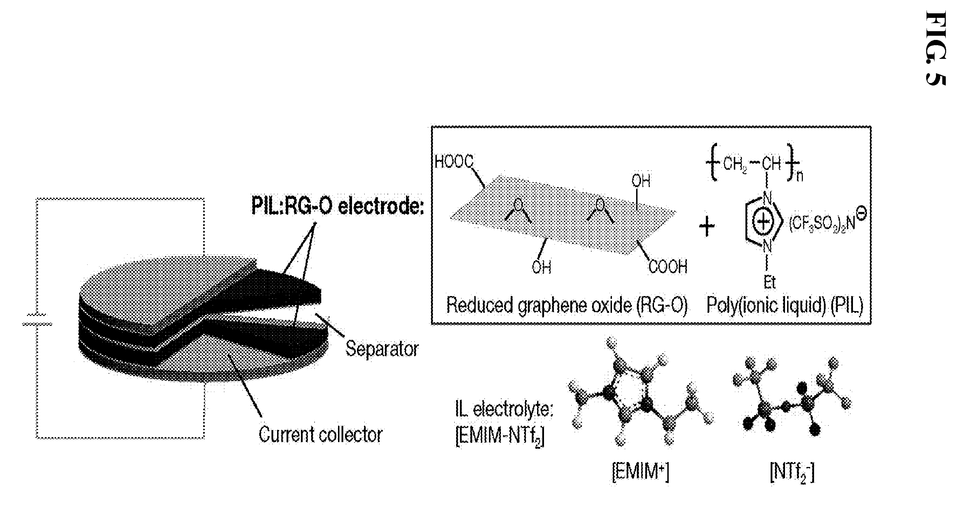

FIG 5 shows the supercapacitor according to the present example comprising the poly(ionic liquid)-modified graphene electrodes (PIL:RG-O electrodes) at the right side and the ionic liquid electrolyte such as 1-ethyl-3-methylimidazolium bis(trifluoromethyl)sulfonylamide (EMIM-NTf₂) at the left side. As shown in the drawing, the poly(ionic liquid)-modified graphene electrodes (PIL:RG-O electrodes) were provided in the form of a thick slurry, and were pressed onto a carbon-coated aluminum current collector. Each electrode had a diameter of 20 mm and a thickness of about 100 µm. The poly(ionic liquid)-modified graphene electrodes (PIL:RG-O electrodes) and the porous polypropylene separator (Celgard 3501) were sandwiched together in a stainless steel cell for the fully assembled two-electrode cell device.

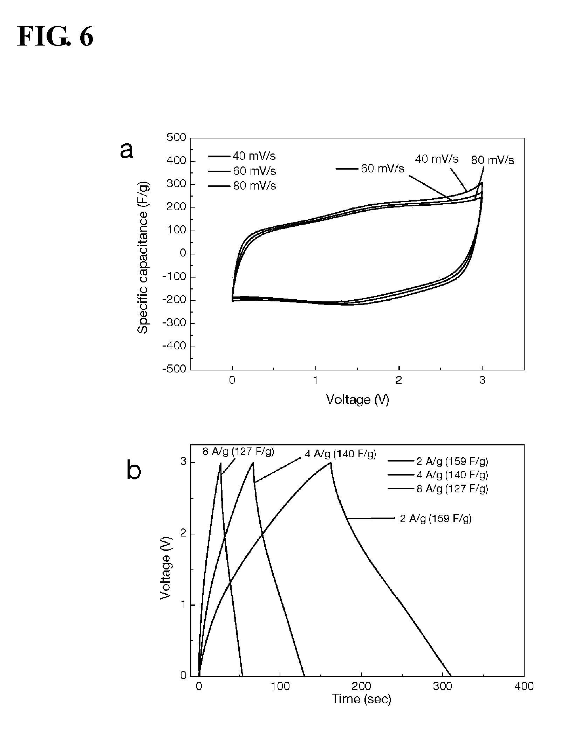

FIG 6 shows the cyclic potential curves at voltage rates and the Galvanostatic charge/discharge curves at different constant currents in the supercapacitor of Example 6 using the poly(ionic liquid)-modified graphene as an electrode material. As shown in FIG 6(a), the cyclic potential curves are depicted at voltage rates of 40 mV/s, 60 mV/s, and 80 mV/s, and FIG 6(b) shows the Galvanostatic charge/discharge curves at constant currents of 10, 20 and 40 mA (respectively corresponding to 2, 4, and 8 A/g charge/discharge current densities), in which almost a linear response is depicted and superior capacitor properties are shown.

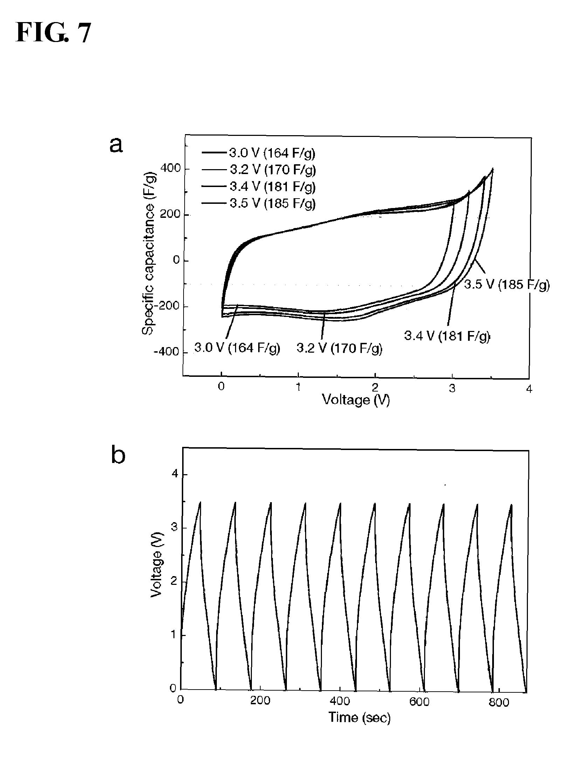

FIG 7(a) shows the cyclic potential curves at maximum voltage in the supercapacitor of Example 6 using the poly(ionic liquid)-modified graphene as an electrode material and also FIG 7(b) shows the Galvanostatic charge/discharge curves at 3.5 V (current density: 8 A/g), in which the curves are stable up to 3.5 V as seen in FIG 7.

In the method of manufacturing the graphene dispersion, the poly(ionic liquid)-modified graphene manufactured thereby and the manufacturing method thereof according to the present invention, graphite is dispersed in the ionic liquid thus obtaining the graphene dispersion from which the poly(ionic liquid)-modified graphene can then be manufactured.

The poly(ionic liquid)-modified graphene can be used as an electrode material of an electrochemical device such as a supercapacitor or an electric double-layer.

Although the embodiments of the present invention have been disclosed for illustrative purposes, those skilled in the art will appreciate that a variety of different modifications, additions and substitutions are possible, without departing from the scope and spirit of the invention as disclosed in the accompanying claims. Accordingly, such modifications, additions and substitutions should also be understood as falling within the scope of the present invention.

## Claims

1. An electrochemical device, manufactured using a poly(ionic liquid)-modified graphene comprising graphene and an ionic liquid polymer.

2. The electrochemical device of claim 1, wherein the poly(ionic liquid)-modified graphene is used as an electrode material.

3. The electrochemical device of claim 1 or 2, wherein the electrochemical device is a battery, a fuel cell, a capacitor or a device formed of a combination thereof, a supercapacitor, an ultracapacitor, or an electric double-layer capacitor.

4. The electrochemical device of any one of claims 1 to 3, wherein the ionic liquid polymer is a compound comprising a combination of a cation and an anion.

5. The electrochemical device of any one of claims 1 to 4, wherein, in the ionic liquid polymer, the cation comprises any one selected from among compounds represented by Formula 1 below: 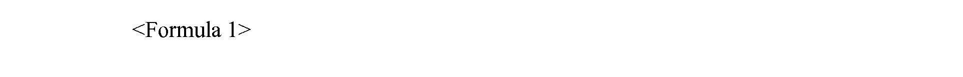 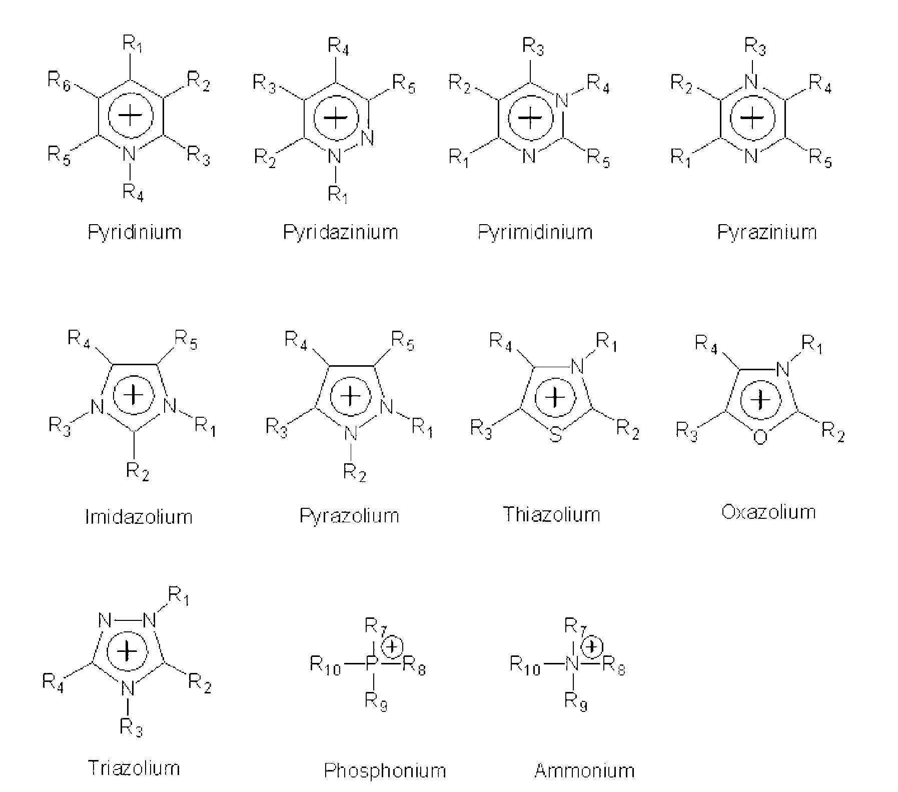 (wherein R₁ to R₁₀ are each independently any one selected from among i) hydrogen, ii) halogen, and iii) C₁-C₂₅ alkyl, alkenyl, alkynyl, benzyl, and phenyl, which may contain a heterogeneous element including O, N, Si and/or S, and may optionally contain Cl, Br, F, I, OH, NH₂ and/or SH),
the anion comprises any one selected from among [CH₃CO₂]⁻, [HSO₄]⁻, [CH₃OSO₃]⁻, [C₂H₅OSO₃]⁻, [AlCl₄]⁻, [CO₃]²⁻, [HCO₃]⁻, [NO₂]⁻, [NO₃]⁻, [SO₄]²⁻, [PO₄]³⁻, [HPO₄]²⁻, [H₂PO₄]⁻, [HSO₃]⁻, [CuCl₂]⁻, Cl⁻, Br⁻, I⁻, [BF₄]⁻, [PF₆]⁻, [SbF₆]⁻, [CF₃SO₃]⁻, [HCF₂CF₂SO₃]⁻, [CF₃HFCCF₂SO₃]⁻, [HCClFCF₂SO₃]⁻, [(CF₃SO₂)₂N]⁻, [(CF₃CF₂SO₂)₂N]⁻, [(CF₃SO₂)₃C]⁻, [CF₃CO₂]⁻, [CF₃OCFHCF₂SO₃]⁻, [CF₃CF₂OCFHCF₂SO₃]⁻, and [CF₃CFHOCF₂CF₂SO₃]⁻, or
both the cation and the anion are used.

6. The electrochemical device of any one of claims 1 to 5, wherein the graphene is obtained by oxidizing/reducing pristine graphite, by thermally treating at high temperature expandable graphite in which an acid is intercalated in each layer of graphite, by treating with microwaves intercalated graphite in which an alkali metal is intercalated in each layer of graphite, or by electrochemically treating graphite.

7. The electrochemical device of any one of claims 1 to 6, wherein the poly(ionic liquid)-modified graphene comprises 5∼95 wt% of the graphene and 5∼95 wt% of the ionic liquid polymer.

8. The electrochemical device of any one of claims 1 to 7, wherein the composite further comprises one or more selected from among a binder, a carbon material, metal particles, and an electrical conductive polymer.

9. The electrochemical device of any one of claims 1 to 8, wherein the binder is any one selected from among polyperfluorosulfonic acid, polytetrafluoroethylene, and a polyvinylidene fluoride copolymer,
the carbon material is one or more selected from among activated carbon, graphite, carbon black, carbon nanotubes, and fullerene, and
the electrical conductive polymer is one or more selected from among polyaniline, polypyrrole, polythiophene, and derivatives thereof.
